# EUROPÄISCHE PATENTSCHRIFT

(11) **EP 1 802 019 B1**
(45) Veröffentlichungstag und Bekanntmachung des Hinweises auf die Patenterteilung: **28.05.2008**
(21) Anmeldenummer: 07005590.0
(22) Anmeldetag: 06.04.2005
(51) Int. Cl.: H04L 1/00, H03M 13/09

(54) **Erkennung von Fehlern bei der Übermittlung von Daten**
Identification of errors in data transmission
Détection d'erreurs lors de la transmission de données

(43) Veröffentlichungstag der Anmeldung: 27.06.2007
(62) Teilanmeldung aus: 05007518.3
(73) Patentinhaber: SIEMENS AKTIENGESELLSCHAFT, 80333 München (DE)
(72) Erfinder: Herbert Barthel, 91074 Herzogenaurach (DE); Georg Haller, 91058 Erlangen (DE); Rainer Mattes, 54349 Trittenheim (DE); Thomas Peter, 92442 Wackersdorf (DE); Wolfgang Schmauss, 90607 Rückersdorf (DE)

(56) Entgegenhaltungen:
- WO-A-02/39593
- DE-A1- 19 833 867
- US-B1- 6 282 691
- MACWILLIAMS F. J.; SLOANE N. J. A.: "The Theory of Error-Correcting Codes, pp. 567-571" 1977, NORTH-HOLLAND , NEW YORK , XP002348328 * Abbildung 18.1 *

## Beschreibung

Die Erfindung betrifft ein Verfahren sowie ein System zur Erkennung von Fehlern bei der Übermittlung von Daten von einem Sender zu mindestens einem Empfänger. Dabei wird in einem ersten Schritt auf Seiten des Senders zumindest aus zu übermittelnden Nutzdaten ein erster Prüfwert gebildet, in einem zweiten Schritt auf Seiten des Senders zumindest aus den Nutzdaten und dem ersten Prüfwert ein zweiter Prüfwert gebildet, in einem dritten Schritt zumindest die Nutzdaten, der erste und der zweite Prüfwert an den Empfänger übermittelt, in einem vierten Schritt auf Seiten des Empfängers mit Hilfe des zweiten Prüfwerts die übermittelten Nutzdaten und der übermittelte erste Prüfwert überprüft und es werden in einem fünften Schritt auf Seiten des Empfängers mit Hilfe des ersten Prüfwerts die übermittelten Nutzdaten überprüft.

Insbesondere in sicherheitsgerichteten Systemen, z. B. in Anlagen der industriellen Automatisierungstechnik, müssen Fehler aller Art mit hoher Wahrscheinlichkeit erkannt werden und so beherrscht werden, dass sie aus Sicht der Sicherheitstechnik keine unzulässige Reaktion sondern allenfalls eine sicherheitsgerichtete Reaktion auslösen. Dies gilt in solchen Systemen insbesondere auch für die Kommunikation, z. B. über Feldbusse. Die Kommunikation in bekannten Feldbussystemen ist üblicherweise nach dem ISO/OSI-Modell aufgebaut, d. h. es werden unterschiedliche Kommunikationsschichten unterschieden, von der physikalischen Schicht auf unterster Ebene bis zur Anwendungsschicht auf höchster Ebene. Bei dem bekannten sicherheitsgerichteten Profil Profisafe, welches eine Erweiterung zu dem bekannten Industriestandard Profibus darstellt, wird eine Kommunikation mit der erforderlichen Sicherheit insbesondere dadurch erreicht, dass den bekannten ISO/OSI-Schichten eine weitere sicherheitsgerichtete Schicht, die so genannte Sicherheitsschicht, auch Safety Layer genannt, hinzugefügt wird. In dieser sicherheitsgerichteten Schicht sind Bestandteile des sicherheitskritischen Kommunikationssystems enthalten, wie z. B. Adressierung, Ansprechüberwachungszeiten, Ablaufsteuerung, Signatur, etc. Zusätzlich wird in dieser Sicherheitsschicht der Kommunikation über die zu übermittelnden Daten ein Prüfwert, z. B. ein so genannter CRC-Prüfwert (CRC = Cyclic Redundancy Check), gebildet. Dieser Prüfwert dient dazu, Fehler mit der erforderlichen Wahrscheinlichkeit aufzudecken. Somit kann z. B. eine Restfehlerrate für Sicherheitsanwendungen kleiner 10⁻⁹ pro Stunde garantiert werden. Die Verwendung eines Prüfwerts dient der Gewährleistung von Datenintegrität bei der Datenübermittlung oder -speicherung. Dabei wird ein Wert, im einfachsten Fall eine Prüfsumme, aus Daten eines Telegramms mit einem geeigneten Verfahren bestimmt, z. B. berechnet. Der sich ergebende Wert wird dann als Prüfwert mit gespeichert bzw. übertragen. Der Empfänger des Telegramms kann aus den Daten ebenfalls einen Prüfwert bestimmen und diesen mit dem mitübertragenen Prüfwert des Senders vergleichen. Sind die beiden Prüfwerte unterschiedlich, liegt ein Fehler, insbesondere ein Übertragungsfehler, vor. Sind die beiden Prüfwerte identisch, ist die Nachricht mit hoher Wahrscheinlichkeit korrekt übertragen worden.

Der senderseitig in der Sicherheitsschicht gebildete Prüfwert wird auf Empfängerseite ebenfalls in der Sicherheitsschicht genutzt, um die korrekte Übertragung der Daten zu prüfen. Die Kommunikation erfolgt jedoch auch über die Standardschichten des ISO/OSI-Modells, auch Standard Layer genannt. In diesen Standardschichten, üblicherweise in der Schicht 2, erfolgt auch eine Prüfwertbildung nach ähnlichem Schema wie in der Sicherheitsschicht. Bei gleicher Art der Prüfwertbildung in der Sicherheitsschicht und in der Standardschicht sinkt die erreichbare Restfehlerwahrscheinlichkeit allerdings nicht im Vergleich zu einer einzigen Prüfwertbildung, da durch die gleichartige Prüfwertbildung lediglich gleiche Bitfehler aufgedeckt werden.

Dies wird im Folgenden an zwei Beispielen der Prüfwertbildung mittels CRC näher erläutert. Dabei werden in einem ersten Beispiel die sicherheitsrelevanten Daten in der Sicherheitsschicht durch einen CRC auf Korrektheit überwacht. Der CRC-Prüfwert wird vom Daten-Sender gebildet und vom Daten-Empfänger geprüft. Die Sicherheitsschicht bedient sich - insbesondere für das Erreichen der erforderlichen Verfügbarkeit - der Standardschichten (z. B. Ethernet, Can-Bus, etc.) für die Kommunikation. In den Standardschichten (üblicherweise in der Schicht 2) existiert auch eine CRC-Prüfung nach gleichem Schema wie in der Sicherheitsschicht. Allerdings benutzt dieser Standard-Layer ein anderes CRC-Polynom als der Safety-Layer und andere Teiler als das CRC-Polynom des Safety-Layer.

Gemäß einem zweiten Beispiel werden die sicherheitsrelevanten Daten in der Sicherheitsschicht wiederum durch einen CRC auf Korrektheit überwacht. Der CRC-Prüfwert wird vom Daten-Sender gebildet und vom Daten-Empfänger geprüft. Die Sicherheitsschicht bedient sich für die Kommunikation - insbesondere für das Erreichen der jeweils geforderten Verfügbarkeit - der Standardschichten, z. B. einem beliebigen Kommunikations-Bus, drahtgebunden oder drahtlos. In den Standardschichten (z. B. Schichten 2 und 3) existiert eine CRC-Prüfung nach gleichem Schema wie in der Sicherheitsschicht. In diesem Fall benutzt die Standardschicht das gleiche CRC-Polynom wie die Sicherheitsschicht und/oder den gleichen Teiler wie das CRC-Polynom der Sicherheitsschicht. In diesem Fall (d. h. bei gleichem Polynom) ist jedoch die Restfehlerrate in bestimmten Bitfehlerbereichen nur noch 10⁻⁵ pro Stunde, was für die meisten sicherheitstechnischen Anwendungen nicht zulässig ist. Der Grund hierfür liegt darin, dass alle oder viele Fehler, die die Standard-CRC-Prüfung nicht erkennt (die Restfehlerrate eines CRC, dessen Eignung geprüft ist, ist <= 2^{-r}, mit r = Bitlänge des CRC-Polynoms) dann auch vom CRC der Sicherheitsschicht nicht erkannt werden.

Bei Verwendung unterschiedlicher Generatorpolynome ist somit eine deutlich bessere Fehlererkennung gewährleistet. Um diese verbesserte Fehlererkennung sicherzustellen, könnte überprüft werden, ob in den Standardschichten das gleiche CRC-Polynom wie in der Sicherheitsschicht verwendet wird bzw. das CRC-Polynom der Standardschichten den gleichen Teiler benutzt wie das CRC-Polynom der Sicherheitsschicht. Diese Prüfung ist jedoch aufwendig, da per Polynomdivision die Teiler untersucht werden müssen. Nichtsdestotrotz ist diese Prüfung bisher für Sicherheitsanwendungen teilweise unablässig. Falls sich nämlich herausstellt, dass in der Standardschicht das Generatorpolynom (= CRC-Polynom) und/oder der Teiler des CRC-Polynoms der Sicherheitsschicht verwendet wird, kann diese Standardschicht nicht zusammen mit dem Generatorpolynom der Sicherheitsschicht eingesetzt werden. Bisher wird somit entweder - wie z. B. in der Bahntechnik gefordert - die Überprüfung der Parameter des CRC für jeden eingesetzten unterlagerten Bus (Standardschicht) durchgeführt oder es wird ein hinreichend großes CRC-Polynom in der Sicherheitsschicht eingesetzt (z. B. ein 64-Bit-Polynom statt eines eigentlich ausreichenden 16- bzw. 24-Bit-Polynoms).

Aus US 6282691 B1 ist ein Verfahren und ein System zur Datenübertragung bekannt, bei dem die Nutzdaten mittels zweier Polynome zur Übertragung codiert werden, wobei die Nutzdaten einmal in umgekehrter Reihenfolge codiert werden.

Der Erfindung liegt die Aufgabe zugrunde, die Erkennung von Fehlern bei der Übermittlung von Daten von einem Sender zu mindestens einem Empfänger zu verbessern.

Diese Aufgabe wird durch ein Verfahren zur Erkennung von Fehlern bei der Übermittlung von Daten von einem Sender zu mindestens einem Empfänger gelöst, bei welchem Verfahren
- in einem ersten Schritt auf Seiten des Senders zumindest aus zu übermittelnden Nutzdaten ein erster Prüfwert gebildet wird,
- in einem zweiten Schritt auf Seiten des Senders zumindest aus den Nutzdaten und dem ersten Prüfwert ein zweiter Prüfwert gebildet wird,
- in einem dritten Schritt zumindest die Nutzdaten, der erste Prüfwert und der zweite Prüfwert an den Empfänger übermittelt werden,
- in einem vierten Schritt auf Seiten des Empfängers mit Hilfe des zweiten Prüfwerts die übermittelten Nutzdaten und der übermittelte erste Prüfwert überprüft werden und
- in einem fünften Schritt auf Seiten des Empfängers mit Hilfe des ersten Prüfwerts die übermittelten Nutzdaten überprüft werden,
wobei im ersten Schritt zur Bildung des ersten Prüfwerts die Nutzdaten verändert werden, wobei im zweiten Schritt zur Bildung des zweiten Prüfwerts die unveränderten Nutzdaten verwendet werden, wobei im vierten Schritt die unveränderten übermittelten Nutzdaten verwendet werden und wobei im fünften Schritt die übermittelten Nutzdaten entsprechend der Änderung im ersten Schritt zur Prüfung mit Hilfe des ersten Prüfwerts verändert werden, wobei die Veränderung der Nutzdaten im ersten und fünften Schritt durch Erweiterung der Nutzdaten erfolgt.

Diese Aufgabe wird durch ein System zur Erkennung von Fehlern bei der Übermittlung von Daten von einem Sender zu mindestens einem Empfänger gelöst, wobei der Sender erste Mittel zur Bildung eines ersten Prüfwerts zumindest aus zu übermittelnden Nutzdaten und zweite Mittel zur Bildung eines zweiten Prüfwerts zumindest aus den Nutzdaten und dem ersten Prüfwert aufweist, wobei Übertragungsmittel zur Übermittlung zumindest der Nutzdaten, des ersten Prüfwerts und des zweiten Prüfwerts an den Empfänger vorgesehen sind, wobei der Empfänger erste Prüfmittel zur Überprüfung der übermittelten Nutzdaten und des übermittelten ersten Prüfwerts mit Hilfe des zweiten Prüfwerts und zweite Prüfmittel zur Überprüfung der übermittelten Nutzdaten mit Hilfe des ersten Prüfwerts aufweist, wobei im Sender dritte Mittel zur Veränderung der Nutzdaten zur Bildung des ersten Prüfwerts vorgesehen sind und wobei im Empfänger vierte Mittel zur Veränderung der übermittelten Nutzdaten entsprechend der Änderung mit den dritten Mitteln zur Überprüfung mit Hilfe des ersten Prüfwerts vorgesehen sind, wobei die dritten und vierten Mittel zur Veränderung der Nutzdaten durch Erweiterung der Nutzdaten vorgesehen sind.

Die Erfindung beruht auf der Idee, dass die Bildung des ersten Prüfwerts auf Basis von veränderten Nutzdaten erfolgt, die Bildung des zweiten Prüfwerts hingegen auf Basis der unveränderten Nutzdaten, oder umgekehrt. Die Veränderung der Nutzdaten ist eine Veränderung in Bezug auf die vom Sender an den Empfänger zu übertragenden Nutzdaten. Auf Seiten des Empfängers ist die Art der Veränderung der Nutzdaten auf Seiten des Senders bekannt und wird entsprechend bei der Überprüfung im fünften Schritt mit Hilfe des ersten Prüfwerts berücksichtigt, d. h. die Nutzdaten werden vor bzw. zur Überprüfung im fünften Schritt auf die gleiche Art geändert wie im ersten Schritt. Die Bildung des zweiten Prüfwerts, z. B. in einer Standardschicht, erfolgt ohne Kenntnis der bei der Bildung des ersten Prüfwerts durchgeführten Änderung an den Daten. Mit dem erfindungsgemäßen Verfahren ist es somit nicht mehr erforderlich die Bildung des ersten bzw. des zweiten Prüfwerts hinsichtlich des Bildungsalgorithmus zu untersuchen. Der zweite Prüfwert ist auch bei identischem Bildungsalgorithmus anders als der erste Prüfwert. Angewendet bei den oben genannten Beispielen ist der in der Standardschicht gebildete zweite Prüfwert somit garantiert anders als der in der Sicherheitsschicht gebildete erste Prüfwert, auch dann, wenn sie das gleiche Generatorpolynom nutzen oder im Generatorpolynom der Standardschicht ein Teiler des Polynoms der Sicherheitsschicht vorkommt. Im Ergebnis deckt jeder beliebige Bildungsalgorithmus im ersten bzw. fünften Schritt auch andere Fehler auf als der Bildungsalgorithmus im zweiten bzw. vierten Schritt des Verfahrens.

Gemäß einer vorteilhaften Ausgestaltung der Erfindung erfolgt die Veränderung der Nutzdaten im ersten und fünften Schritt durch Erweiterung der Nutzdaten. Eine solche Erweiterung ist besonders einfach zu realisieren. Diese Erweiterung ist jedoch nicht Bestandteil der Nutzdaten bei der Bildung des zweiten Prüfwerts und ist nicht Bestandteil der an den Empfänger übertragenen Daten. Gleichwohl ist die Art der Erweiterung empfängerseitig bekannt und wird bei der Überprüfung im fünften Schritt berücksichtigt.

Eine weitere Möglichkeit der Änderung der Nutzdaten besteht gemäß einer weiteren vorteilhaften Ausgestaltung der Erfindung darin, dass die Veränderung der Nutzdaten im ersten und fünften Schritt durch zumindest teilweise Invertierung der Nutzdaten erfolgt.

Gemäß einer weiteren vorteilhaften Ausgestaltung der Erfindung erfolgt zur Bildung des ersten Prüfwerts im ersten Schritt und/oder zur Bildung des zweiten Prüfwerts im zweiten Schritt eine zyklische Redundanzprüfung. Eine zyklische Redundanzprüfung, abgekürzt CRC (CRC = Cyclic Redundancy Check), ist ein Verfahren zur Bestimmung eines Prüfwerts für Daten, um Fehler bei der Übertragung der Daten erkennen zu können. CRC-Prüfwerte werden vor Beginn der Übertragung und nach Abschluss der Übertragung berechnet. Anschließend werden die beiden Prüfwerte verglichen. CRC-Prüfungen sind so ausgelegt, dass vorhersehbare Fehler, wie sie beispielsweise durch Rauschen auf der Leitung verursacht werden könnten, fast immer entdeckt werden können. Ein CRC-Polynom ist mit einer Primzahl zu vergleichen, der Bildungsalgorithmus damit, dass die Daten durch diese Primzahl dividiert werden. Der Rest der Division entspricht dem CRC-Ergebnis. Alle Fehler die den gleichen Rest erzeugen werden somit nicht erkannt. Die CRC-Bildung entspricht somit einer Polynomdivision bei der der Divisionsrest als Prüfwert verwendet wird

Die Erfindung ermöglicht gemäß einer weiteren vorteilhaften Ausgestaltung insbesondere, dass zur Bildung des ersten Prüfwerts im ersten Schritt und zur Bildung des zweiten Prüfwerts im zweiten Schritt ein identischer Bildungsalgorithmus verwendet wird. Die Fehlererkennungsrate erhöht sich dabei trotz identischer Bildungsalgorithmen im Vergleich zur Verwendung einer einzigen Prüfwertbildung.

Vorteilhafterweise erfolgt - abhängig vom Ergebnis der Überprüfung im vierten und fünften Schritt - eine sicherheitsgerichtete Reaktion. Sicherheitsgerichtet (engl. failsafe) bedeutet, dass das System bei Störung oder im Fehlerfall durch die sicherheitsgerichtete Reaktion in einen sicheren Zustand übergeht.

Gemäß einer weiteren vorteilhaften Ausgestaltung der Erfindung wird das Verfahren für die Kommunikation innerhalb eines sicherheitsgerichteten Systems eingesetzt. Bei einem sicherheitsgerichteten System müssen alle im System vorkommenden Fehler (hier Fehler, die in der Kommunikation auftreten können) mit einer hinreichend großen Wahrscheinlichkeit erkannt und beherrscht werden, mit dem Ziel die Gefährdung von Mensch, Umwelt und/oder Maschine durch Fehler des Systems ausreichend zu reduzieren.

Da das vorgeschlagene Verfahren bzw. System insbesondere auch eine sichere Kommunikation über nicht sichere Kommunikationswege unterstützt, wird gemäß einer weiteren vorteilhaften Ausgestaltung der Erfindung vorgeschlagen, dass die Daten über mindestens ein Feldbussystem übermittelt werden.

Nachfolgend wird die Erfindung anhand der in den Figuren dargestellten Ausführungsbeispiele näher beschrieben und erläutert.

Es zeigen:
- FIG 1: ein System zur Erkennung von Fehlern bei der Übermittlung von Daten von einem Sender zu einem Empfänger,
- FIG 2: ein weiteres System zur Erkennung von Fehlern bei der Übermittlung von Daten von einem Sender zu einem Empfänger,
- FIG 3: eine schematische Darstellung der verschiedenen Kommunikationsschichten in einem Kommunikationsnetzwerk,
- FIG 4: den Aufbau eines Standard-Ethernet-Telegramms,
- FIG 5: die einzelnen Schritte eines Verfahrens zur Erkennung von Fehlern bei der Übermittlung von Daten von einem Sender zu mindestens Empfänger,
- FIG 6: ein Ausführungsbeispiel der Erfindung, bei welchem die Veränderung der Nutzdaten im ersten und fünften Schritt durch Erweiterung der Nutzdaten erfolgt,
- FIG 7: das in diesem Fall an den jeweiligen Empfänger übermittelte Telegramm,
- FIG 8: ein Ausführungsbeispiel der Erfindung, bei welchem zusätzlich zu der Umkehrung der Byteanordnung der Nutzdaten ein virtuelles Byte bei der Bildung des ersten Prüfwerts hinzugefügt wird.

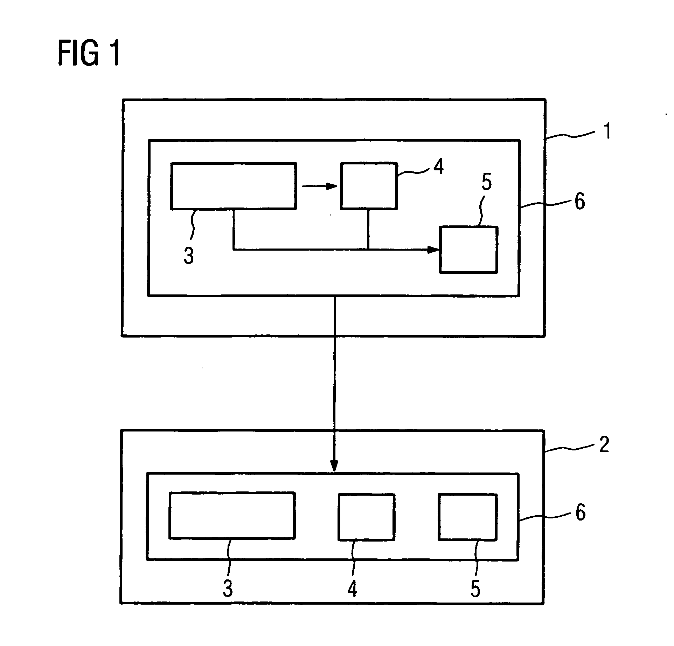

FIG 1 zeigt ein System zur Erkennung von Fehlern bei der Übermittlung von Daten von einem Sender 1 zu mindestens einem Empfänger 2. Auf Seiten des Senders 1 wird zumindest aus den zu übermittelnden Nutzdaten 3 ein erster Prüfwert 4 gebildet. In einem zweiten Schritt wird auf Seiten des Senders 1 zumindest aus den Nutzdaten 3 und dem ersten Prüfwert 4 ein zweiter Prüfwert 5 gebildet. Die Nutzdaten 3, der erste Prüfwert 4 und der zweite Prüfwert 5 werden innerhalb eines Telegramms 6 an den Empfänger 2 übermittelt. In einem vierten Schritt werden auf Seiten des Empfängers 2 mit Hilfe des zweiten Prüfwerts 5 die übermittelten Nutzdaten 3 und der übermittelte erste Prüfwert 4 überprüft. In einem fünften Schritt werden auf Seiten des Empfängers 2 mit Hilfe des ersten Prüfwerts 4 die übermittelten Nutzdaten 3 überprüft.

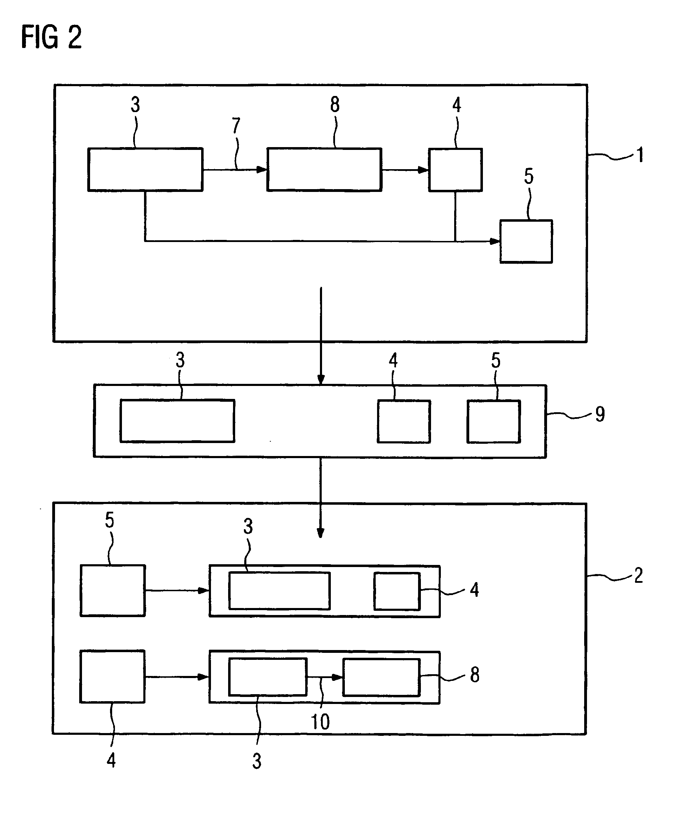

FIG 2 zeigt ein System zur Erkennung von Fehlern der Übermittlung von Daten 3, 4, 5 von einem Sender 1 zu einem Empfänger 2. Der Sender 1 weist erste Mittel zur Bildung eines ersten Prüfwerts 4 aus den zu übermittelnden Nutzdaten 3 und zweite Mittel zur Bildung eines zweiten Prüfwerts 5 aus den Nutzdaten 3 und dem ersten Prüfwert 4 auf. Zusätzlich weist der Sender 1 dritte Mittel 7 zur Veränderung der Nutzdaten 3 in veränderte Nutzdaten 8 auf, welche zur Bildung des ersten Prüfwerts 4 vorgesehen sind, d.h. bei der Bildung des ersten Prüfwerts 4 genutzt werden. Die Daten 3, 4, 5 werden in Form eines Telegramms 9 mit Übertragungsmitteln an den Empfänger 2 übertragen. Der Empfänger 2 weist erste Prüfmittel zur Überprüfung der übermittelten Nutzdaten 3 und des übermittelten ersten Prüfwerts 4 mit Hilfe des zweiten Prüfwerts 5 auf und er weist zweite Prüfmittel zur Überprüfung der übermittelten Nutzdaten 3 mit Hilfe des ersten Prüfwerts 4 auf. Zusätzlich weist der Empfänger 2 vierte Mittel 10 zur Veränderung der übermittelten Nutzdaten 3 in geänderte Nutzdaten 8 auf, entsprechend der Änderung mit den dritten Mitteln 7 zur Überprüfung mit Hilfe des ersten Prüfwerts 4.

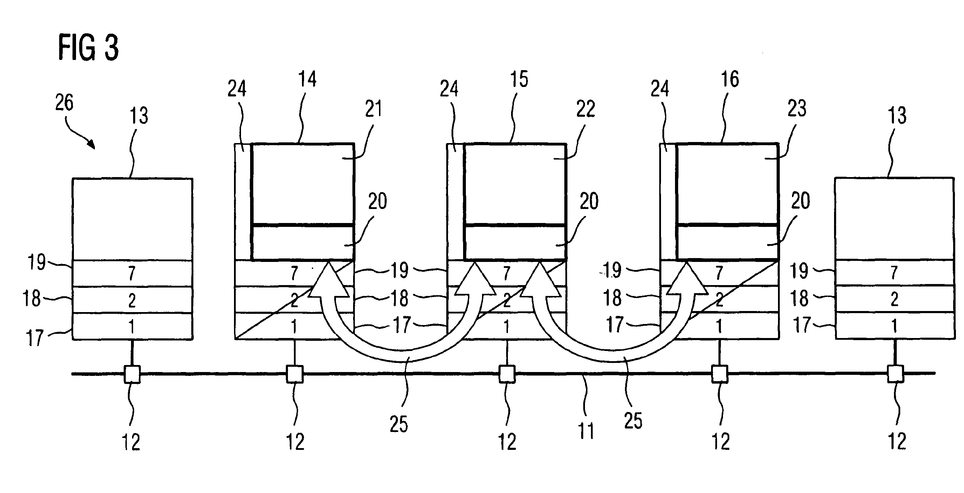

FIG 3 verdeutlicht die sicherheitsgerichtete Kommunikation mit Hilfe des so genannten Schichtenmodells, in diesem Fall basierend auf dem ISO/OSI-Schichtenmodell. FIG 3 stellt ein sicherheitsgerichtetes System 26 dar. Ein Schichtenmodell beschreibt in Form von logischen abgeschlossenen Schichten, wie die Kommunikation in einem Netzwerk aufgebaut ist. In diesem Fall weist das Kommunikationsmodell für die nicht sicherheitsgerichtete Kommunikation sieben Schichten auf, von denen in FIG 3 drei Schichten exemplarisch dargestellt sind. Diese nicht sicherheitsgerichteten Schichten 17, 18, 19, auch Black Channel genannt, umfassen nicht sicherheitsgerichtete Komponenten wie z. B. ASICs, Links, Kabel, usw. Dargestellt sind die untersten beiden Schichten 17, 18 sowie die oberste Schicht der nicht sicherheitsgerichteten Kommunikation 19. Die unterlagerte nicht sicherheitsgerichtete Kommunikation weist die notwendigen Mittel zum Erreichen der im jeweiligen Anwendungsfall geforderten Verfügbarkeit auf. D. h. die nicht sicherheitsgerichteten Schichten stellen die jeweils geforderte Verfügbarkeit der Kommunikation sicher. In der sicherheitsgerichteten Kommunikationsschicht, auch Sicherheitsschicht 20 genannt, welche z. B. redundant aufgebaut ist, wird die erforderliche Sicherheit (z. B. Restfehlerrate kleiner als 10⁻⁹ pro Stunde) erreicht, d. h. die erforderlichen zusätzlichen Eigenschaften für eine besonders hohe Sicherheit werden hier von der Sicherheitsschicht 20 erfüllt, z. B. Profisafe. Die Sicherheitsschicht 20 stellt sicherheitsgerichtete Funktionen zur Verfügung, z. B. bezüglich Adressierung, Watch Dog Timer, Sequenzierung, Signatur, etc. Gemäß Ausführungsbeispiel von FIG 3 sind die Kommunikationsmittel als Teil von Standard-Eingabe-/Ausgabebaugruppen 13 sowie einer sicherheitsgerichtete Eingabebaugruppe 14, einer sicherheitsgerichteten Steuerung 15 und einer sicherheitsgerichteten Ausgabebaugruppe 16 ausgeführt. Die Kommunikationsmittel kommunizieren über Punkt-zu-Punkt-Verbindungen 11 und über durch diese verbundene Switches 12. Die sicherheitsgerichtete Kommunikation wird durch die Pfeile 25 symbolisiert. Auf die sicherheitsgerichtete Kommunikationsschicht 20 setzen sicherheitsgerichtete Anwendungen 21 - 23 auf, welche jedoch selbst nicht Teil des Profils der sicherheitsgerichteten Kommunikationsschicht sind. Für die sicherheitsgerichteten Funktionen nicht relevante Funktionen 24 setzen direkt auf die nicht sicherheitsgerichteten Kommunikationsschichten 17 - 19 auf. Solche nicht sicherheitsgerichteten Funktionen betreffen beispielsweise die Diagnose. Die sicherheitsgerichtete Kommunikationsschicht realisiert sicherheitsgerichtete Funktionen wie Prüfwertbestimmung, Telegrammzähler, Synchronisierung.

Im in FIG 3 dargestellten Ausführungsbeispiel der Erfindung wird in der Sicherheitsschicht 20 der Kommunikation über die Daten ein CRC-Prüfwert gebildet. Dieser dient dazu, Fehler mit der erforderlichen Wahrscheinlichkeit aufzudecken. Oder anders ausgedrückt eine Restfehlerrate z. B. für Sicherheitsanwendungen kleiner als 10⁻⁹ pro Stunde zu garantieren, um so z. B. die zulässigen Grenzen für SIL3 nach IEC 61505 einzuhalten. Mit dem vorgeschlagenen Verfahren ist es nicht mehr erforderlich beim Einsatz der Sicherheitsschicht die Standardschichten hinsichtlich des dort verwendeten Sicherungsalgorithmus zu untersuchen. Die Untersuchung, welche CRC-Polynome in den Sicherungsschichten der Standardschicht verwendet werden und ob diese Polynome Teiler des CRC der Sicherheitsschicht verwenden, kann somit entfallen. Ein weiterer Vorteil ist, dass mit s dieser Erfindung die Bedingung, dass ein Safety-Layer nur mit "untersuchtem" Standard-Layer verwendet werden darf, entfallen kann, da beliebige Standard-Layer verwendet werden können. Die Anforderungen R17 und R18 gemäß IEC 62280-1 sind mit Anwendung dieser Erfindung für alle Standard-Busse (= non-trusted transmission system) automatisch erfüllt.

Der oben genannte erste Prüfwert entspricht dem in der Sicherheitsschicht gebildeten Prüfwert, der oben genannte zweite Prüfwert entspricht dem in einer Standardschicht gebildeten Prüfwert.

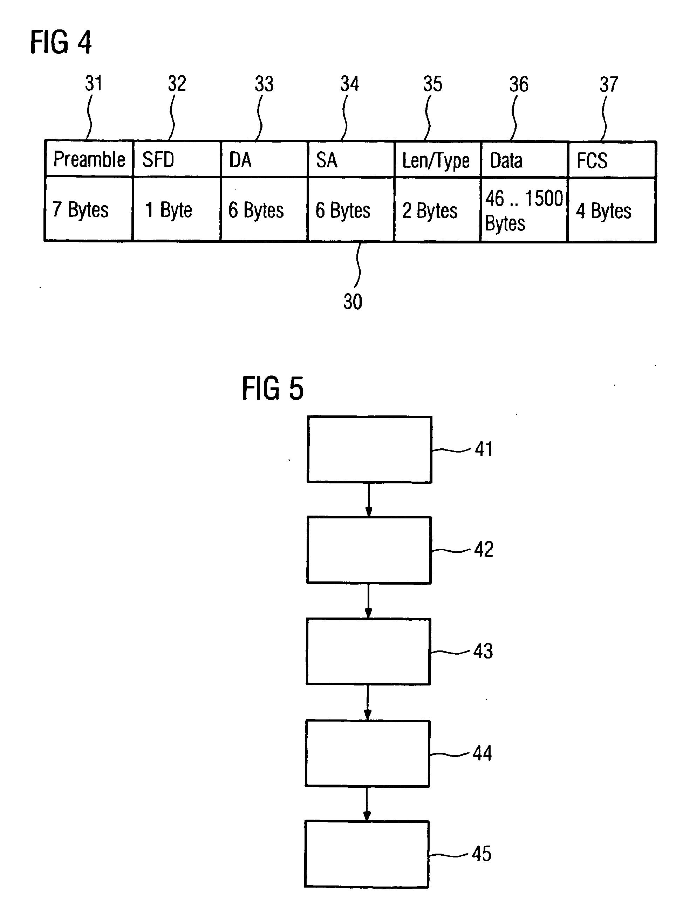

FIG 4 zeigt den Aufbau eines Standard-Ethernet-Telegramms. Das Standard-Ethernet-Telegramm 30 weist eine Preamble 31 auf, mit einer Länge von 7 Byte, welche eine 10101010...-Kombination enthält. Der folgende Start Frame Delimiter 32 (abgekürzt SFD) weist 1 Byte mit den Bits 10101011 auf. Die Destination Address 33, die Zieladresse, abgekürzt DA, enthält die Ethernet-Adresse des Empfängers und weist üblicherweise eine Länge von 6 Byte auf. Die folgende Source-Address 34, die Sendeadresse, abgekürzt SA, enthält die Ethernet-Adresse des Senders und weist üblicherweise 6 Byte auf. Die Len 35 enthält gemäß der Norm IEEE 802.3 die Länge bzw. den Ethertype des folgenden Datenfeldes, mit einer Länge von 2 Byte. Das folgende Datenfeld Data 36 enthält die Nutzdaten, welche üblicherweise zwischen 46 und 1500 Byte Länge aufweisen können. Der auf die Nutzdaten folgende Teil des Telegramms 30 wird als FCS 37 bezeichnet (FCS = File Check Sequence) und enthält die Prüfsummer der übertragenen Daten, d.h. DA, SA, Len, Data. Die FCS ist hier ein 32 Bit CRC-Prüfwert.

FIG 5 verdeutlicht die einzelnen Schritte des Verfahrens zur Erkennung von Fehlern bei der Übermittlung von Daten 3, 4, 5 von einem Sender 1 zu mindestens 1 Empfänger 2. Dargestellt sind die fünf aufeinander folgenden Schritte 41 bis 45. Im ersten Schritt 41 wird auf Seiten des Senders 1 zumindest aus zu übermittelnden Nutzdaten 3 ein erster Prüfwert 4 gebildet, wobei zur Bildung des ersten Prüfwerts 4 die Nutzdaten 3 verändert werden. Im zweiten Schritt 42 wird auf Seiten des Senders 1 zumindest aus den Nutzdaten 3 und dem ersten Prüfwert 4 ein zweiter Prüfwert 5 gebildet, wobei zur Bildung des zweiten Prüfwerts 5 die unveränderten Nutzdaten 3 verwendet werden. Im dritten Schritt 43 werden zumindest die unveränderten Nutzdaten 3, der erste Prüfwert 4 und der zweite Prüfwert 5 an den Empfänger 2 übermittelt. Im vierten Schritt 44 werden auf Seiten des Empfängers 2 mit Hilfe des zweiten Prüfwerts 5 die übermittelten Nutzdaten 3 und der übermittelte erste Prüfwert 4 überprüft. Im fünften Schritt 45 werden auf Seiten des Empfängers 2 mit Hilfe des ersten Prüfwerts 4 die übermittelten Nutzdaten 3 überprüft, wobei die übermittelten Nutzdaten 3 entsprechend der Änderung im ersten Schritt 41 zur Prüfung mit Hilfe des ersten Prüfwerts 4 verändert werden.

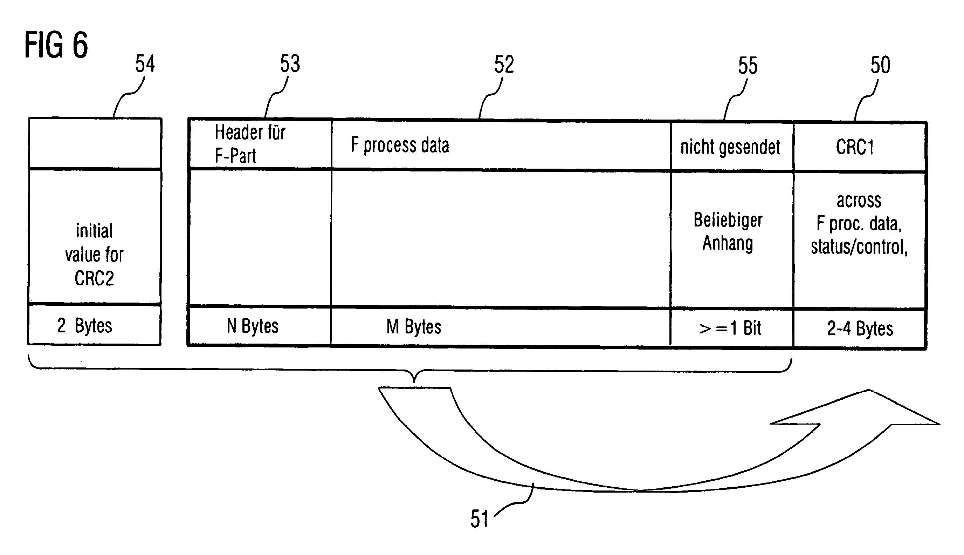

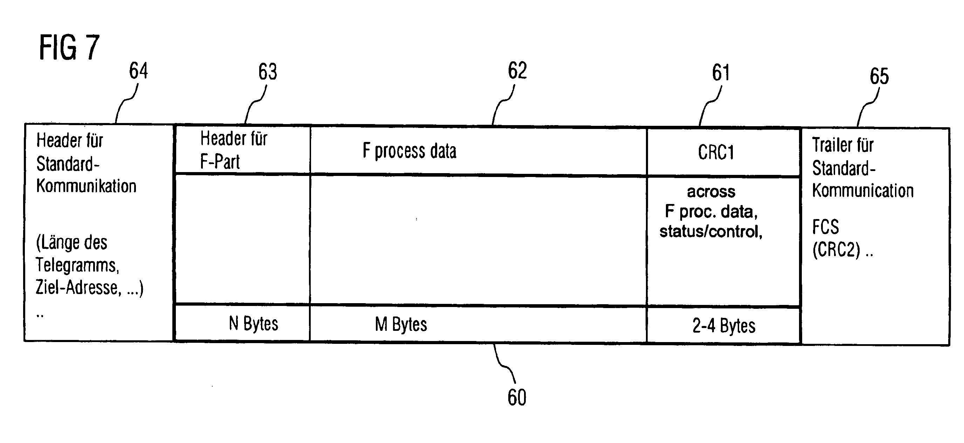

FIG 6 zeigt ein Ausführungsbeispiel der Erfindung, bei welchem die Veränderung der Nutzdaten im ersten und fünften Schritt durch Erweiterung der Nutzdaten erfolgt. In FIG 6 ist die Bildung des Prüfwerts 50 dargestellt. Die Mittel zur Bildung des Prüfwerts 50 sind durch den Pfeil 51 angedeutet. Der Prüfwert 50 wird aus den eigentlichen Nutzdaten 52 sowie einem Header für den sicherheitsgerichteten Teil 53, 50 und einem Initialwert 54 zur Berechnung des Prüfwerts gebildet. Zusätzlich zu diesen Daten werden die Nutzdaten 52 um einen beliebigen Anhang von mindestens 1 Bit Länge 55 erweitert. Der beliebige Anhang 55 geht somit in die Berechnung des Prüfwerts 50 mit ein. Es wird somit vor den Prüfwert, z. B. den CRC-Prüfwert, bzw. nach den zu sichernden Daten mindestens ein Bit angehängt, dessen Zustand im Sender und Empfänger gleich ist, das mit in die Bildung des Sicherheits-Prüfwerts eingeht aber nicht übertragen wird (siehe FIG 7). Oder anders formuliert: Man fügt ein Datum (mindestens ein Bit) in den mittels Prüfwert zu sichernden Bereich an die letzte Stelle ein, welches dem Sender und dem Empfänger zur Prüfwertbildung bekannt ist. Dieses Datum ist jedoch nicht Bestandteil des zu übertragenden Telegramms der Sicherheitsschicht.

FIG 7 zeigt das an den jeweiligen Empfänger übermittelte Telegramm 60. Der bei der Bildung des Prüfwerts 50 verwendete Anhang 55 wird bei dem übermittelten Telegramm 60 nicht mit übertragen. Das Telegramm 60 besteht somit lediglich aus den Nutzdaten 62, dem Header 63 für den sicherheitsgerichteten Teil, dem Prüfwert 61, sowie dem Header 64 und dem Trailer 65 der Standardkommunikation.

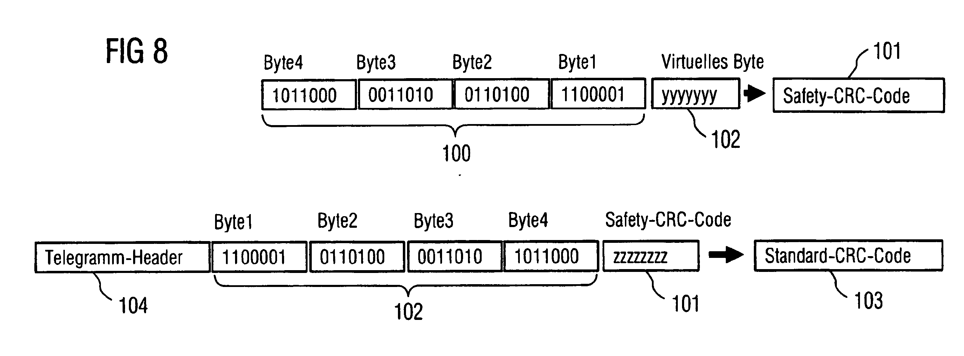

FIG 8 zeigt ein weiteres Ausführungsbeispiel des Verfahrens zur Erkennung von Fehlern bei der Ermittlung von Daten. Zusätzlich zu der Umkehrung der Byteanordnung der Nutzdaten 100 wird hier ein so genanntes virtuelles Byte 102 bei der Bildung des ersten Prüfwerts 101 hinzugefügt. Bei der Bildung des zweiten Prüfwerts 103 werden hingegen die unveränderten Nutzdaten 102, d.h. in ursprünglicher Byteanordnung, sowie der erste Prüfwert 101 berücksichtigt. Bei der Übermittlung als Telegramm wird den Nutzdaten 102, dem ersten Prüfwert 101 und dem zweiten Prüfwert 103 noch ein Telegrammheader 104 vorangestellt. Solchermaßen wird das Telegramm an einen Empfänger übermittelt.

Weitere hier nicht dargestellte Lösungsalternativen sind die Einfügung eines Datums zwischen die Nutzdaten und den ersten Prüfwert, wobei das Datum bei Bildung des ersten Prüfwerts nicht berücksichtigt wird, aber bei der Bildung des zweiten Prüfwerts oder die Invertierung der Nutzdaten zur Bildung des ersten Prüfwerts.

Zusammengefasst betrifft die Erfindung somit ein Verfahren sowie ein System zur Erkennung von Fehlern bei der Übermittlung von Daten 3, 4, 5 von einem Sender 1 zu mindestens einem Empfänger 2. Bei dem Verfahren wird in einem ersten Schritt 41 auf Seiten des Senders 1 zumindest aus zu übermittelnden Nutzdaten 3 ein erster Prüfwert 4 gebildet, wird in einem zweiten Schritt 42 auf Seiten des Senders 1 zumindest aus den Nutzdaten 3 und dem ersten Prüfwert 4 ein zweiter Prüfwert 5 gebildet, werden in einem dritten Schritt 43 zumindest die Nutzdaten 3, der erste Prüfwert 4 und der zweite Prüfwert 5 an den Empfänger 2 übermittelt, werden in einem vierten Schritt 44 auf Seiten des Empfängers 2 mit Hilfe des zweiten Prüfwerts 5 die übermittelten Nutzdaten 3 und der übermittelte erste Prüfwert 4 überprüft und werden in einem fünften Schritt 45 auf Seiten des Empfängers 2 mit Hilfe des ersten Prüfwerts 4 die übermittelten Nutzdaten 3 überprüft. Um die Erkennung von Fehlern bei der Übermittlung von Daten vom Sender zum mindestens einen Empfänger zu verbessern, wird vorgeschlagen, dass im ersten Schritt 41 zur Bildung des ersten Prüfwerts 4 die Nutzdaten 3 verändert werden, dass im zweiten Schritt 42 zur Bildung des zweiten Prüfwerts 5 die unveränderten Nutzdaten 3 verwendet werden, dass im vierten Schritt 44 die unveränderten übermittelten Nutzdaten 3 verwendet werden und dass im fünften 45 Schritt die übermittelten Nutzdaten 3 entsprechend der Änderung im ersten Schritt 41 zur Prüfung mit Hilfe des ersten Prüfwerts (4) verändert werden.

## Patentansprüche

1. Verfahren zur Erkennung von Fehlern bei der Übermittlung von Daten (3, 4, 5) von einem Sender (1) zu mindestens einem Empfänger (2), bei welchem Verfahren
• in einem ersten Schritt (41) auf Seiten des Senders (1) zumindest aus zu übermittelnden Nutzdaten (3) ein erster Prüfwert (4) gebildet wird,
• in einem zweiten Schritt (42) auf Seiten des Senders (1) zumindest aus den Nutzdaten (3) und dem ersten Prüfwert (4) ein zweiter Prüfwert (5) gebildet wird,
• in einem dritten Schritt (43) zumindest die Nutzdaten (3), der erste Prüfwert (4) und der zweite Prüfwert (5) an den Empfänger (2) übermittelt werden,
• in einem vierten Schritt (44) auf Seiten des Empfängers (2) mit Hilfe des zweiten Prüfwerts (5) die übermittelten Nutzdaten (3) und der übermittelte' erste Prüfwert (4) überprüft werden und
• in einem fünften Schritt (45) auf Seiten des Empfängers (2) mit Hilfe des ersten Prüfwerts (4) die übermittelten Nutzdaten (3) überprüft werden, wobei
im ersten Schritt (41) zur Bildung des ersten Prüfwerts (4) die Nutzdaten (3) verändert werden, dass im zweiten Schritt (42) zur Bildung des zweiten Prüfwerts (5) die unveränderten Nutzdaten (3) verwendet werden, dass im vierten Schritt (44) die unveränderten übermittelten Nutzdaten (3) verwendet werden und dass im fünften (45) Schritt die übermittelten Nutzdaten (3) entsprechend der Änderung im ersten Schritt (41) zur Prüfung mit Hilfe des ersten Prüfwerts (4) verändert werden, **dadurch gekennzeichnet, dass** die Veränderung der Nutzdaten (3) im ersten und fünften Schritt (41, 45) durch Erweiterung der Nutzdaten (3) erfolgt.

2. Verfahren nach Anspruch 1,
**dadurch gekennzeichnet,**
**dass** die Veränderung der Nutzdaten (3) im ersten und fünften Schritt (41, 45) durch zusätzlich zumindest teilweise Invertierung der Nutzdaten (3) erfolgt.

3. Verfahren nach einem der vorhergehenden Ansprüche,
**dadurch gekennzeichnet,**
**dass** zur Bildung des ersten Prüfwerts (4) im ersten Schritt (41) und/oder zur Bildung des zweiten Prüfwerts (5) im zweiten Schritt (42) eine zyklische Redundanzprüfung erfolgt.

4. Verfahren nach einem der vorhergehenden Ansprüche,
**dadurch gekennzeichnet,**
**dass** zur Bildung des ersten Prüfwerts (4) im ersten Schritt (41) und zur Bildung des zweiten Prüfwerts (5) im zweiten Schritt (42) ein identischer Bildungsalgorithmus verwendet wird.

5. Verfahren nach einem der vorhergehenden Ansprüche,
**dadurch gekennzeichnet,**
**dass** abhängig vom Ergebnis der Überprüfung im vierten und fünften Schritt (44, 45) eine sicherheitsgerichtete Reaktion erfolgt.

6. Verfahren nach einem der vorhergehenden Ansprüche,
**dadurch gekennzeichnet,**
**dass** es für die Kommunikation innerhalb eines sicherheitsgerichteten Systems (26) eingesetzt wird.

7. Verfahren nach einem der vorhergehenden Ansprüche,
**dadurch gekennzeichnet,**
**dass** die Daten (3, 4, 5) über mindestens ein Feldbussystem (11, 12) übermittelt werden.

8. System zur Erkennung von Fehlern bei der Übermittlung von Daten (3, 4, 5) von einem Sender (1) zu mindestens einem Empfänger (2), wobei der Sender (1) erste Mittel zur Bildung eines ersten Prüfwerts (4) zumindest aus zu übermittelnden Nutzdaten (3) und zweite Mittel zur Bildung eines zweiten Prüfwerts (5) zumindest aus den Nutzdaten (3) und dem ersten Prüfwert (4) aufweist, wobei Übertragungsmittel zur Übermittlung zumindest der Nutzdaten (3), des ersten Prüfwerts (4) und des zweiten Prüfwerts (5) an den Empfänger (2) vorgesehen sind, wobei der Empfänger (2) erste Prüfmittel zur Überprüfung der übermittelten Nutzdaten (3) und des übermittelten ersten Prüfwerts (4) mit Hilfe des zweiten Prüfwerts (5) und zweite Prüfmittel zur Überprüfung der übermittelten Nutzdaten (3) mit Hilfe des ersten Prüfwerts (4) aufweist, wobei
im Sender (1) dritte Mittel zur Veränderung der Nutzdaten (3) zur Bildung des ersten Prüfwerts (4) vorgesehen sind und dass im Empfänger (2) vierte, Mittel zur Veränderung der übermittelten Nutzdaten (3) entsprechend der Änderung mit den dritten Mitteln zur Überprüfung mit Hilfe des ersten Prüfwerts (4) vorgesehen sind, **dadurch gekennzeichnet, dass** die dritten und vierten Mittel zur Veränderung der Nutzdaten (3) durch Erweiterung der Nutzdaten (3) vorgesehen sind.

9. System nach Anspruch 8,
**dadurch gekennzeichnet,**
**dass** die dritten und vierten Mittel zur Veränderung der Nutzdaten (3) durch zusätzlich zumindest teilweise Invertierung der Nutzdaten (3) vorgesehen sind.

10. System nach einem der Ansprüche 8 bis 9,
**dadurch gekennzeichnet,**
**dass** die ersten und/oder zweiten Mittel zur Bildung des ersten Prüfwerts (4) bzw. zur Bildung des zweiten Prüfwerts (5) mit Hilfe einer zyklischen Redundanzprüfung vorgesehen sind.

11. System nach einem der Ansprüche 8 bis 10,
**dadurch gekennzeichnet,**
**dass** die ersten und/oder zweiten Mittel zur Bildung des ersten Prüfwerts (4) bzw. zur Bildung des zweiten Prüfwerts (5) mit Hilfe eines identischen Bildungsalgorithmus vorgesehen sind.

12. System nach einem der Ansprüche 8 bis 11,
**dadurch gekennzeichnet,**
**dass** Mittel zur Auslösung einer sicherheitsgerichteten Reaktion abhängig vom Ergebnis der Überprüfung mit den ersten und zweiten Prüfmitteln vorgesehen sind.

13. System nach einem der Ansprüche 8 bis 12,
**dadurch gekennzeichnet,**
**dass** es Teil eines sicherheitsgerichteten Systems (26) ist.

14. System nach einem der Ansprüche 8 bis 13,
**dadurch gekennzeichnet,**
**dass** die Übertragungsmittel zur Übermittlung der Daten (3, 4, 5) ein Feldbussystem (11, 12) aufweisen.

## Claims

1. Method for detecting errors in the communication of data (3, 4, 5) from a transmitter (1) to at least one receiver (2), in which method
• in a first step (41) on the side of the transmitter (1) a first check value (4) is generated at least from user data (3) to be communicated,
• in a second step (42) on the side of the transmitter (1) a second check value (5) is generated at least from the user data (3) and the first check value (4),
• in a third step (43) at least the user data (3), the first check value (4) and the second check value (5) are communicated to the receiver (2),
• in a fourth step (44) on the side of the receiver (2) the communicated user data (3) and the communicated first check value (4) are verified with the aid of the second check value (5),
• in a fifth step (45) on the side of the receiver (2) the communicated user data (3) are verified with the aid of the first check value (4), with,
in the first step (41) the user data (3) being modified to generate the first check value (4), in the second step (42) the unmodified user data (3) being used to generate the second check value (5), in the fourth step (44) the unmodified communicated user data (3) being used, and in the fifth (45) step the communicated user data (3) being modified according to the modification in the first step (41) for checking with the aid of the first check value (4), **characterised in that** the user data (3) is modified in the first and fifth step (41, 45) by expanding the user data (3).

2. Method according to claim 1,
**characterised in that**
the modification of the user data (3) in the first step and fifth step (41, 45) is carried out by at least partially inverting the user data (3).

3. Method according to one of the preceding claims,
**characterised in that**
a cyclic redundancy check is carried out to generate the first check value (4) in the first step (41) and/or to generate the second check value (5) in the second step (42).

4. Method according to one of the preceding claims,
**characterised in that**
an identical generation algorithm is used to generate the first check value (4) in the first step (41) and/or to generate the second check value (5) in the second step (42).

5. Method according to one of the preceding claims,
**characterised in that**,
depending on the result of the verification in the fourth step and fifth step (44, 45), there is a failsafe response.

6. Method according to one of the preceding claims,
**characterised in that**
the said method is used for communication within a failsafe system (26).

7. Method according to one of the preceding claims,
**characterised in that**
the data (3, 4, 5) is communicated via at least one field bus system (11, 12).

8. System for detecting errors in the communication of data (3, 4, 5) from a transmitter (1) to at least one receiver (2), the transmitter (1) having first means for generating a first check value (4) at least from user data (3) to be communicated and having second means for generating a second check value (5) at least from the user data (3) and the first check value (4), transmission means being provided for communicating at least the user data (3), the first check value (4) and the second check value (5) to the receiver (2), the receiver (2) having first check means for verifying the communicated user data (3) and the communicated first check value (4) with the aid of the second check value (5), and having second check means for verifying the communicated user data (3) with the aid of the first check value (4), with,
third means being provided in the transmitter (1) for modifying the user data (3) to generate the first check value (4) and fourth means being provided in the receiver (2) for modifying the communicated user data (3) according to the modification with the third means, for verification with the aid of the first check value (4), **characterised in that** the third and fourth means are provided for modification of the user data (3) by expansion of the user data (3).

9. System according to claim 8,
**characterised in that**
the third and fourth means are provided for modifying the user data (3) by additional at least partial inversion of the user data (3).

10. System according to one of claims 9 to 10,
**characterised in that**
the first and/or second means are provided for generating the first check value (4) or for generating the second check value (5) with the aid of a cyclic redundancy check.

11. System according to one of claims 8 to 10,
**characterised in that**
the first and/or second means are provided for generating the first check value (4) or for generating the second check value (5) with the aid of an identical generation algorithm.

12. System according to one of claims 8 to 11,
**characterised in that**
means for initiating a failsafe response are provided, depending on the result of the verification with the first and second check means.

13. System according to one of claims 8 to 12,
**characterised in that**
the said system is part of a failsafe system (26).

14. System according to one of claims 8 to 13,
**characterised in that**
the transmission means for communicating the data (3, 4, 5) have a field bus system (11, 12).

## Revendications

1. Procédé de détection d'erreurs lors de la transmission de données (3, 4, 5) d'un émetteur (1) à au moins un récepteur (2), dans lequel
• dans une première étape (41), du côté de l'émetteur (1), une première valeur de contrôle (4) est formée au moins à partir de données utiles à transmettre (3),
• dans une deuxième étape (42), du côté de l'émetteur (1), une deuxième valeur de contrôle (5) est formée au moins à partir des données utiles (3) et de la première valeur de contrôle (4),
• dans une troisième étape (43), au moins les données utiles (3), la première valeur de contrôle (4) et la deuxième valeur de contrôle (5) sont transmises au récepteur (2),
• dans une quatrième étape (44), du côté du récepteur (2), les données utiles transmises (3) et la première valeur de contrôle transmise (4) sont vérifiées à l'aide de la deuxième valeur de contrôle (5), et
• dans une cinquième étape (45), du côté du récepteur (2), les données utiles transmises (3) sont vérifiées à l'aide de la première valeur de contrôle (4),
et dans lequel
dans la première étape (41), les données utiles (3) sont modifiées pour la formation de la première valeur de contrôle (4), dans la deuxième étape (42), les données utiles non modifiées (3) sont utilisées pour la formation de la deuxième valeur de contrôle (5), dans la quatrième étape (44), les données utiles transmises non modifiées (3) sont utilisées, et dans la cinquième étape (45), les données utiles transmises (3) sont modifiées conformément à la modification dans la première étape (41) pour la vérification à l'aide de la première valeur de contrôle (4),
**caractérisé par le fait que**
la modification des données utiles (3) dans la première et la cinquième étape (41, 45) s'effectue par extension des données utiles (3).

2. Procédé selon la revendication 1,
**caractérisé par le fait que** la modification des données utiles (3) dans la première et la cinquième étape (41, 45) s'effectue en plus par inversion au moins partielle des données utiles (3).

3. Procédé selon l'une des revendications précédentes,
**caractérisé par le fait que**, pour la formation de la première valeur de contrôle (4) dans la première étape (41) et/ou pour la formation de la deuxième valeur de contrôle (5) dans la deuxième étape (42), on effectue un contrôle de redondance cyclique.

4. Procédé selon l'une des revendications précédentes,
**caractérisé par le fait que**, pour la formation de la première valeur de contrôle (4) dans la première étape (41) et/ou pour la formation de la deuxième valeur de contrôle (5) dans la deuxième étape (42), on utilise un algorithme de formation identique.

5. Procédé selon l'une des revendications précédentes,
**caractérisé par le fait que**, en fonction du résultat de la vérification dans la quatrième et la cinquième étape (44, 45), on effectue une réaction axée sur la sécurité.

6. Procédé selon l'une des revendications précédentes,
**caractérisé par le fait qu'**il est utilisé pour la communication à l'intérieur d'un système sécurisé (26).

7. Procédé selon l'une des revendications précédentes,
**caractérisé par le fait que** les données (3, 4, 5) sont transmises par l'intermédiaire d'au moins un système de bus de terrain (11, 12).

8. Système de détection d'erreurs lors de la transmission de données (3, 4, 5) d'un émetteur (1) à au moins un récepteur (2), dans lequel l'émetteur (1) comporte des premiers moyens pour la formation d'une première valeur de contrôle (4) au moins à partir de données utiles à transmettre (3) et des deuxièmes moyens pour la formation d'une deuxième valeur de contrôle (5) au moins à partir des données utiles (3) et de la première valeur de contrôle (4), des moyens de transmission sont prévus pour la transmission au moins des données utiles (3), de la première valeur de contrôle (4) et de la deuxième valeur de contrôle (5) au récepteur (2), le récepteur (2) comporte des premiers moyens de vérification pour la vérification des données utiles transmises (3) et de la première valeur de contrôle transmise (4) à l'aide de la deuxième valeur de contrôle (5) et des deuxièmes moyens de vérification pour la vérification des données utiles transmises (3) à l'aide de la première valeur de contrôle (4), et dans lequel
des troisièmes moyens sont prévus dans l'émetteur (1) pour modifier les données utiles (3) en vue de la formation de la première valeur de contrôle (4), des quatrièmes moyens sont prévus dans le récepteur (2) pour la modification des données utiles transmises (3) conformément à la modification effectuée par les troisièmes moyens en vue de la vérification à l'aide de la première valeur de contrôle (4),
**caractérisé par le fait que**
les troisièmes et les quatrièmes moyens sont prévus pour la modification des données utiles (3) par extension des données utiles (3).

9. Système selon la revendication 8,
**caractérisé par le fait que** les troisièmes et les quatrièmes moyens sont prévus pour la modification des données utiles (3) en plus par inversion au moins partielle des données utiles (3).

10. Système selon l'une des revendications 8 à 9,
**caractérisé par le fait que** les premiers et/ou les deuxièmes moyens sont prévus pour la formation de la première valeur de contrôle (4) respectivement pour la formation de la deuxième valeur de contrôle (5) à l'aide d'un contrôle de redondance cyclique.

11. Système selon l'une des revendications 8 à 10,
**caractérisé par le fait que** les premiers et/ou les deuxièmes moyens sont prévus pour la formation de la première valeur de contrôle (4) respectivement pour la formation de la deuxième valeur de contrôle (5) à l'aide d'un algorithme de formation identique.

12. Système selon l'une des revendications 8 à 11,
**caractérisé par le fait que** des moyens sont prévus pour le déclenchement d'une réaction axée sur la sécurité en fonction du résultat de la vérification avec les premiers et les deuxièmes moyens de vérification.

13. Système selon l'une des revendications 8 à 12,
**caractérisé par le fait qu'**il fait partie d'un système sécurisé (26).

14. Système selon l'une des revendications 8 à 13,
**caractérisé par le fait que** les moyens de transmission pour la transmission des données (3, 4, 5) comportent un système de bus de terrain (11, 12).
